# EUROPEAN PATENT SPECIFICATION

(11) **EP 3 686 115 B1**
(45) Date of publication and mention of the grant of the patent: **24.03.2021**
(21) Application number: 19215553.9
(22) Date of filing: 12.12.2019
(51) Int. Cl.: B65B 31/04, B65B 3/04

(54) **GAS REPLACEMENT APPARATUS**
GASAUSTAUSCHVORRICHTUNG
APPAREIL DE REMPLACEMENT DE GAZ

(30) Priority: 14.12.2018 JP 2018234587
(43) Date of publication of application: 29.07.2020
(73) Proprietor: Toyo Jidoki Co., Ltd., Tokyo 108-0014 (JP)
(72) Inventor: SAGO, Hideo, Iwakuni-shi, Yamaguchi 740-0045 (JP); HONDA, Yasuyuki, Iwakuni-shi, Yamaguchi 740-0045 (JP); YOSHIKADO, Masaru, Iwakuni-shi, Yamaguchi 740-0045 (JP); HIGUCHI, Tatsuya, Iwakuni-shi, Yamaguchi 740-0045 (JP)
(74) Representative: Grünecker Patent- und Rechtsanwälte PartG mbB

(56) References cited:
- JP-A- S5 589 022
- US-A- 3 430 414
- US-A1- 2007 074 492
- US-A1- 2013 125 508

## Description

### TECHNICAL FIELD

The present invention relates to a gas replacement apparatus configured to supply a replacement gas into a bag.

### BACKGROUND ART

Devices that seal a bag having a desired gas in its inside have been known. For example, Japanese patent application publication No. 54-58590 discloses a device that ejects an inert gas from an inert gas ejection nozzle into a bag to replace a gas in the bag with the inert gas, and then, seals the bag.

There are also known devices that cause a gas ejection nozzle to follow a bag while moving the bag (see Japanese patent application publication Nos. 2005-255236, 2012-111499, 08-169416 and 55-89022). In particular, the device disclosed in Japanese patent application publication No. 55-89022 moves in such a manner that an inert gas supply pipe that supplies an inert gas to the inside of a bag and a pair of plate members that sandwich a bag mouth follow the bag.

### SUMMARY OF INVENTION

### Technical Problem

In the device of Japanese patent application publication No. 54-58590, a first inert gas supply pipe is withdrawn from the bag, the bag is moved to the next station, and then, a second inert gas supply pipe is inserted into the bag. Therefore, outside air may flow into the bag and the inert gas in the bag may flow out of the bag after the withdrawal of the first inert gas supply pipe and before the insertion of the second inert gas supply pipe. In addition, since it is difficult to supply the inert gas into the bag while moving the bag from a station where the first inert gas supply pipe is provided to a station where the second inert gas supply pipe is provided, the time during which the inert gas can be supplied into the bag is limited.

In the devices disclosed in Japanese patent application publication Nos. 2005-255236, 2012-111499 and 08-169416, a bag mouth is not closed while supplying a desired gas into the bag. Therefore, the desired gas is supplied into the bag in a situation where outside air may flow into the bag, and thus a gas inside the bag is not always efficiently replaced with the desired gas.

In the device in Japanese patent application publication No. 55-89022, the inert gas is supplied from the inert gas supply pipe to the inside of a bag while sandwiching the bag mouth by a pair of plate members, but the supply of the inert gas is not always performed stably. Specifically, in the device disclosed in Japanese patent application publication No. 55-89022, while the upper end portion (mouth portion) of a bag is supported by a pair of plate members, the side portions (edges) of the bag are not supported. Since the bag is conveyed without being supported from the side portions in this manner, when a force from one side portion to the other side portion (that is, a force in the width direction) acts on the bag, there is a possibility that the bag may come off from the support of the pair of plate members in a relatively easy manner. For example, when a bag is intermittently moved at a high speed and a relatively large inertia force acts on the bag in the width direction, there is a concern that the position and the posture of the bag may be displaced during conveyance. In such a case, the supply of the inert gas into the bag becomes unstable, and further, there is a possibility that it may be difficult to properly seal the bag mouth.

This invention has been contrived in view of the above-described circumstances, and an object thereof is to provide a technique capable of stably supplying a replacement gas into a bag.

### Solution to Problem

One aspect of the present invention is directed to a gas replacement apparatus comprising: a side holding unit that holds a side portion of a bag; a mouth holding unit that holds a mouth portion of the bag; a gas nozzle having an ejection port to eject a replacement gas; a side holding drive unit that moves the side holding unit; a mouth holding drive unit that moves the mouth holding unit; a gas nozzle drive unit that moves the gas nozzle; and a sealing unit that seals the mouth portion, wherein the side holding drive unit and the mouth holding drive unit move the side holding unit and the mouth holding unit from a first processing position to a second processing position while maintaining a state where the side holding unit holds the side portion and the mouth holding unit holds the mouth portion, and the gas nozzle drive unit moves the gas nozzle from the first processing position to the second processing position while maintaining a state where the ejection port is arranged inside the bag.

The side holding drive unit may move the side holding unit from the second processing position to a third processing position while maintaining a state where the side holding unit holds the side portion, and the mouth holding drive unit and the gas nozzle drive unit may move the mouth holding unit and the gas nozzle from the second processing position to the first processing position without moving the mouth holding unit and the gas nozzle from the second processing position to the third processing position.

The mouth holding drive unit and the gas nozzle drive unit may include a common movement base to which the mouth holding unit and the gas nozzle are attached, and the mouth holding unit and the gas nozzle may be moved by moving the movement base.

A plurality of side holding units, a plurality of mouth holding units, and a plurality of gas nozzles may be provided, and two or more mouth holding units and two or more gas nozzles may be attached to the single movement base.

The side holding unit may hold the bag in a suspended state.

The side holding drive unit may intermittently move the side holding unit.

The side holding drive unit may include a rotary table provided to be rotatable about a rotation axis, and the side holding unit may be attached to an outer peripheral portion of the rotary table and may be moved in accordance with rotation of the rotary table.

A plurality of side holding units, a plurality of mouth holding units, and a plurality of gas nozzles may be provided, the mouth holding drive unit and the gas nozzle drive unit may move the mouth holding unit and the gas nozzle from the second processing position to the first processing position after the side holding unit is arranged at the second processing position.

The mouth holding drive unit and the gas nozzle drive unit may move the mouth holding unit and the gas nozzle toward the first processing position during at least a part of time when the side holding unit moves from the second processing position to the third processing position.

A plurality of stations may be provided to be continuously adjacent to each other, the plurality of stations including a first processing station, a second processing station, a third processing station, and a fourth processing station, the plurality of side holding units may include a first side holding unit and a second side holding unit, the plurality of mouth holding units may include a first mouth holding unit and a second mouth holding unit, the plurality of gas nozzles may include a first gas nozzle and a second gas nozzle, for the first side holding unit, the first mouth holding unit, and the first gas nozzle, the first processing station may correspond to the first processing position, the second processing station may correspond to the second processing position, and the third processing station may correspond to the third processing position, and for the second side holding unit, the second mouth holding unit, and the second gas nozzle, the second processing station may correspond to the first processing position, the third processing station may correspond to the second processing position, and the fourth processing station may correspond to the third processing position.

### Advantageous Effects of Invention

According to the present invention, it is possible to stably supply a replacement gas into a bag.

### BRIEF DESCRIPTION OF DRAWINGS

Fig. 1 is a plan view illustrating an example of a packaging system;
Fig. 2 is a side view of a cross section of the packaging system, and mainly illustrates elements arranged at a sixth station in a gas replacement apparatus;
Fig. 3 is a plan view illustrating a partial configuration of a gas replacement apparatus;
Fig. 4 is a schematic plan view for describing the operation of a gas replacement apparatus;
Fig. 5 is a schematic plan view for describing the operation of a gas replacement apparatus;
Fig. 6 is a schematic plan view for describing the operation of a gas replacement apparatus;
Fig. 7 is a schematic plan view for describing the operation of a gas replacement apparatus; and
Fig. 8 is a schematic plan view for describing the operation of a gas replacement apparatus.

### DESCRIPTION OF EMBODIMENTS

Hereinafter, an embodiment of the present invention will be described with reference to the drawings. Hereinafter, a packaging system to which a gas replacement apparatus and a gas replacement method are applied will be described as an example. According to the gas replacement apparatus and the gas replacement method to be described below, a replacement gas (for example, an inert gas, steam, oxygen, carbon dioxide, or other gases) is blown inside a bag containing a content, and a gas inside the bag is replaced with the replacement gas.

In the following description, the terms "upstream" and "downstream" are based on a bag conveyance direction. In addition, the terms "height direction", "horizontal direction", "upward direction" and "downward direction" are based on the vertical direction in which gravity acts. The "height direction" means a direction parallel to the vertical direction, the "horizontal direction" means a direction that forms 90 degrees with the vertical direction, the "upward direction" means a direction opposite to the vertical direction in the height direction, and the "downward direction" means the same direction as the vertical direction.

### [Packaging System]

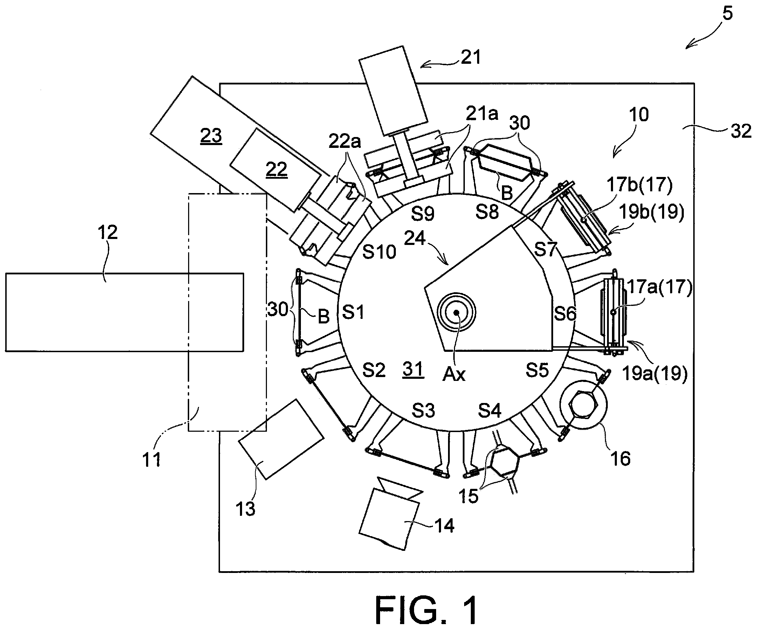

Fig. 1 is a plan view illustrating an example of a packaging system 5.

The packaging system 5 includes: a rotary table 31 installed on a rack 32, and a plurality of side holding units 30 attached to an outer peripheral portion of the rotary table 31 at equal intervals. Each of the side holding units 30 moves along a circular trajectory along with intermittent rotation of the rotary table 31 about a rotation axis Ax while holding side portions of a bag B to move around a plurality of stations (a first station S1 to a tenth station S10 in the illustrated packaging system 5). A bag B held by each of the side holding units 30 is subjected to corresponding processing at each station.

The number and specific configurations of the side holding units 30 are not limited, and in the illustrated packaging system 5, the plurality of side holding units 30 are constituted by the same number of gripper units (that is, ten gripper units) as the number of stations. Each of the gripper units includes two grippers, and each of the side holding units 30 holds a corresponding bag B as both side portions of the corresponding bag B are gripped by these two grippers. The opening and closing of each of the grippers included in each of the side holding units 30 and a distance between the grippers can be appropriately changed by a holding adjustment mechanism (not illustrated) under control of a control unit 11.

A side holding unit 30 arranged at the first station (bag feeding station) S1 receives a bag B from a conveyor magazine 12 storing a plurality of bags B (i.e., empty bags) through a bag feeder (not illustrated), and grips both the side portions of the bag B to hold the bag B in a suspended state. Each of the illustrated side holding units 30 (gripper units) grips both side portions at positions close to a mouth portion of a bag B or a part of the mouth portion and both side portions of a bag B. Each of the side holding units 30 adjusts a tension to be applied to a bag B by changing the distance between the grippers in the state of holding the corresponding bag B, and can place the bag B, for example, in a relaxed state where the mouth portion is loosened or in a tense state where the mouth portion is closed.

The mouth portion of a bag B is a range including an edge of the bag B (that is, the upper edge of the bag B that is suspended by a side holding unit 30). However, various types of processing for the mouth portion to be described later are not necessarily performed in the range including the edge of a bag B, and may be performed in a range of a bag B which does not include the edge but can form an opening. A portion of a bag B opposite to the mouth portion (that is, the side opposing the mouth portion) is a bottom portion, and both the side portions, the front surface, and the back surface of a bag B extend between the mouth portion and the bottom portion. Therefore, the bottom portion is formed by the range including the lower edge of a bag B in a state where the bag B is suspended by a side holding unit 30, and both the side portions are formed by the range including the edges extending in the height direction.

A printer 13 is provided at the second station (printing station) S2. The printer 13 prints various types of information (for example, a date when a packaging process is performed) on a bag B. The third station (printing inspection station) S3 is provided with a print inspection unit 14 that inspects a print state of a bag B. The configuration of the print inspection unit 14 is not limited. For example, the print inspection unit 14 may include an image sensor that acquires image data of the printed portion of a bag B, and a processor that can analyze the image data of the printed portion and determine whether the print is good or bad. Incidentally, some functions of the print inspection unit 14 may be realized by the control unit 11. For example, image data of the printed portion of a bag B acquired by the print inspection unit 14 may be sent to the control unit 11, and the control unit 11 may analyze the image data to determine whether the print is good or bad.

The fourth station (opening station) S4 is provided with an opening unit 15 that opens the mouth portion of a bag B. The illustrated opening unit 15 includes two suckers that can reciprocate in the horizontal direction, and causes the suckers to move in a direction such that the suckers are distanced from each other in a state of sucking the front surface and the back surface of a bag B respectively, so that the mouth portion of the bag B can open. At this time, if necessary, the two grippers (the side holding unit 30) holding both the side portions of the bag B move in the horizontal direction so as to approach each other, and the front surface and back surface of the bag B are bent.

The fifth station (content injection station) S5 is provided with an injection unit 16. The injection unit 16 injects a content (not illustrated) inside a bag B arranged at the fifth station S5 through the opened mouth portion of the bag B. The illustrated injection unit 16 includes a hopper (funnel), and the content is injected into the bag B from the hopper. A state of the content to be stored in a bag B is not limited. For example, the content may be a solid, a liquid, a paste (fluid), a gel, or a mixture containing two or more of them.

The sixth station S6, the seventh station S7, and the eighth station S8 are gas replacement stations. Each bag B is subject to a gas replacement process while moving through the sixth station S6 to the eighth station S8, and a gas inside each bag B is replaced with a replacement gas. The sixth station S6, the seventh station S7, and the eighth station S8 are provided with a plurality of gas nozzles 17 (that is, a first gas nozzle 17a and a second gas nozzle 17b), a plurality of mouth holding units 19 (that is, a first mouth holding unit 19a and a second mouth holding unit 19b), and a follow-up unit 24 (that is, mouth holding drive units 27 and gas nozzle drive units 28 to be described later) that moves the gas nozzles 17 and the mouth holding units 19. Details of these devices arranged at the sixth station S6, the seventh station S7, and the eighth station S8 and the gas replacement process will be described later.

A sealing unit 21 is provided at the ninth station (sealing processing station) S9. The sealing unit 21 has two sealing plates 21a that perform heat-sealing while sandwiching the mouth portion (in particular, a sealing-planned portion) of a bag B.

The tenth station (cooling and discharge station) S10 is provided with a cooling unit 22 and a release unit 23. The cooling unit 22 includes two cooling plates 22a that perform cooling while sandwiching the mouth portion (in particular, a location heat-sealed by the sealing unit 21 (that is, the sealing-planned portion)) of a bag B arranged at the tenth station S10. After the mouth portion is cooled by the cooling unit 22, a bag (i.e., product bag) B is released from a side holding unit 30 at the tenth station S10 to fall, is guided by the release unit 23 so as to be sent to the subsequent stage.

The various devices included in the packaging system 5 described above and a gas replacement apparatus 10 to be described later are driven while being controlled by the control unit 11 as necessary. For example, the control unit 11 controls the sealing unit 21 to open and close the two sealing plates 21a in accordance with the rotation of the rotary table 31 (that is, the movement of the side holding units 30). Specifically, the two sealing plates 21a are placed in the open state when a side holding unit 30 moves from the eighth station S8 to the ninth station S9, and when a side holding unit 30 moves from the ninth station S9 to the tenth station S10. As a result, a bag B can move together with a side holding unit 30 without being obstructed by the two sealing plates 21a. On the other hand, the two sealing plates 21a are placed in the closed state in a state where a side holding unit 30 is arranged at the ninth station S9, the mouth portion of a bag B held by a side holding unit 30 is pressed and sealed by the two sealing plates 21a.

### [Gas replacement apparatus]

The gas replacement apparatus 10, which replaces a gas inside a bag B with a replacement gas and then seals the mouth portion of the bag B as described above, is provided at the sixth station S6 to the ninth station S9 of the illustrated packaging system 5.

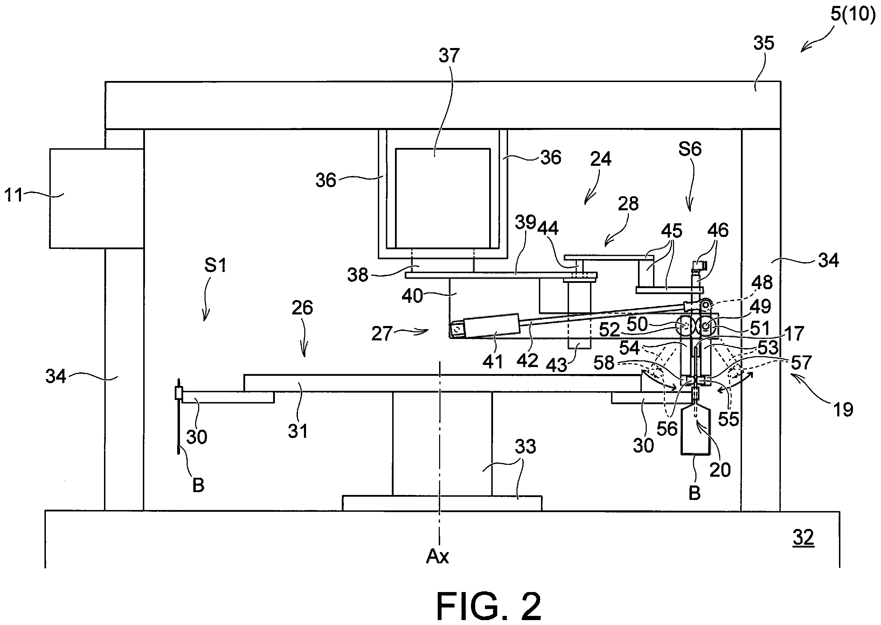

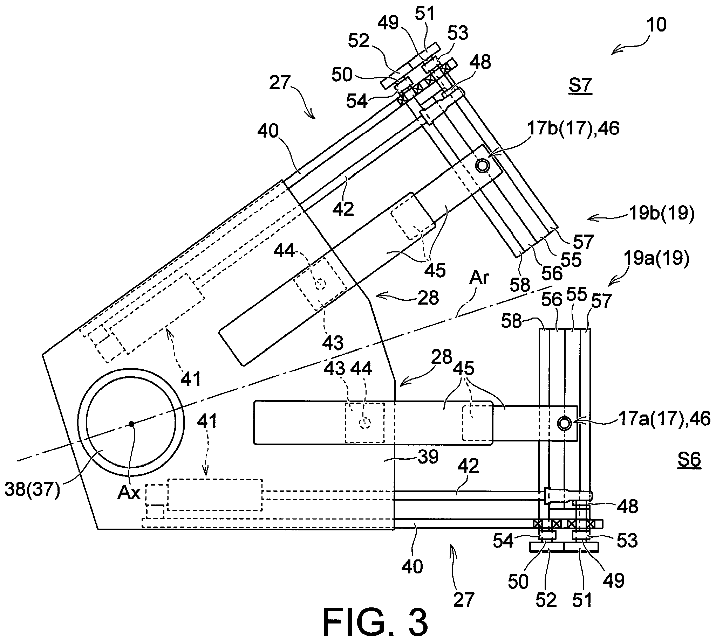

Fig. 2 is a side view of a cross section of the packaging system 5, and mainly illustrates elements arranged at the sixth station S6 in the gas replacement apparatus 10. Fig. 3 is a plan view illustrating a partial configuration of the gas replacement apparatus 10.

The gas replacement apparatus 10 according to the present embodiment includes the side holding units 30, the mouth holding units 19, the gas nozzles 17, the side holding drive unit 26, the mouth holding drive units 27, the gas nozzle drive units 28, and the sealing unit 21 (see Fig. 1).

### [Side Holding Unit and Side Holding Drive Unit]

As the side holding drive unit 26 moves each of the side holding units 30, each of the bags B moves around the plurality of stations S1 to S10 including the sixth station S6 to the ninth station S9 as described above. The illustrated side holding drive unit 26 is a so-called rotary type conveyance unit, includes the rotary table 31 and moves intermittently the plurality of side holding units 30 attached to the outer peripheral portion of the rotary table 31.

The rotary table 31 is installed on the rack 32 via a table support 33 as illustrated in Fig. 2, is provided to be rotatable about the rotation axis Ax, and is connected with a rotation shaft (not illustrated). The illustrated rotary table 31 has a circular planar shape, and the rotation axis Ax passes through the center of the rotary table 31. The rotation shaft extends on the rotation axis Ax at the inner side of the table support 33, and is rotated intermittently about the rotation axis Ax by a drive source (not illustrated) (for example, a motor, or the like). The rotary table 31 and each of the side holding units 30 rotate intermittently about the rotation axis Ax together with the rotation shaft.

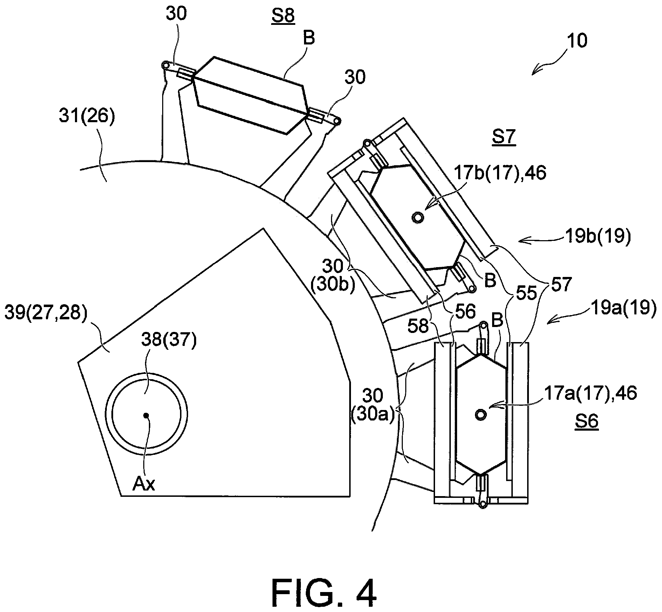

Each of the side holding units 30 moves around the first station S1 to the tenth station S10 intermittently in accordance with the rotation of the table support 33 while drawing a circular trajectory. In this manner, a trajectory of each of the side holding units 30 is a circular end less trajectory, and each bag B is conveyed from the upstream side to the downstream side while being held by the corresponding side holding unit 30 in a suspended state. Between two side holding units 30 provided to be adjacent to each other in the illustrated plurality of side holding units 30, the side holding unit 30 arranged on the upstream side is referred to as a first side holding unit 30a, and the side holding unit 30 arranged on the downstream side is referred to as a second side holding unit 30b (see Figs. 4 to 7 to be described later).

### [Gas Nozzle, Gas Nozzle Drive Unit, Mouth Holding Unit, and Mouth Holding Drive Unit]

Props 34 extending in the height direction are installed on the rack 32. A main frame 35 extending in the horizontal direction is fixed to the props 34. A motor support frame 36 is attached to the main frame 35. The motor support frame 36 is positioned below the main frame 35, and a motor (for example, a servo motor) 37 is attached to the motor support frame 36. The motor 37 has a motor rotation shaft 38. The motor rotation shaft 38 extends downward so as to penetrate the motor support frame 36. The central axis of the motor rotation shaft 38 and the rotation axis Ax coincide with each other, and the motor rotation shaft 38 rotates about the rotation axis Ax. A movement base 39 extending in the horizontal direction is attached to a lower distal end of the motor rotation shaft 38. Two support blocks 40 and two lifting/lowering drive units (for example, air cylinders) 43 are attached to the lower surface of the movement base 39.

Each of the lifting/lowering drive units 43 has a lifting/lowering drive rod 44 whose protruding amount in the upward direction is variable. The gas nozzles 17 (that is, the first gas nozzle 17a and the second gas nozzle 17b) are connected respectively to the lifting/lowering drive rods 44 via nozzle holding units 45 and gas guide units 46.

Each of the support blocks 40 extends in the horizontal direction. A first rotation shaft 49 and a second rotation shaft 50 extending in a horizontal direction perpendicular to the extending direction of each support block 40 are rotatably attached to each of the support blocks 40 via bearings. A first rotation gear 51 is fixed to a distal end of the first rotation shaft 49, and a first pressing lever 53 is fixed to an intermediate portion of the first rotation shaft 49. The first rotation shaft 49, the first rotation gear 51, and the first pressing lever 53 rotate integrally about a common axis (that is, a central axis of the first rotation shaft 49). A second rotation gear 52 is fixed to a distal end of the second rotation shaft 50, and a second pressing lever 54 is fixed to an intermediate portion of the second rotation shaft 50. The second rotation shaft 50, the second rotation gear 52, and the second pressing lever 54 rotate integrally about a common axis (that is, a central axis of the second rotation shaft 50).

The first rotation gear 51 and the second rotation gear 52 are engaged with each other at their outer peripheral portions, and exhibit symmetrical rotational behaviors. The first pressing lever 53 and the second pressing lever 54 extend downward from the first rotation shaft 49 and the second rotation shaft 50, respectively, and swing in accordance with rotation of the first rotation shaft 49 and the second rotation shaft 50. A first pressing support unit 57 and a second pressing support unit 58 are fixed to the lower ends of the first pressing lever 53 and the second pressing lever 54, respectively. The first pressing support unit 57 and the second pressing support unit 58 extend in the horizontal direction, and have a first pressing unit 55 and a second pressing unit 56, respectively. The first pressing unit 55 and the second pressing unit 56 extend in the horizontal direction so as to oppose each other, and are configured using a member (for example, sponge) having both flexibility and a close contact property.

An opening/closing drive unit (for example, an air cylinder) 41 is rotatably attached to each of the support blocks 40. The opening/closing drive unit 41 has an opening/closing drive rod 42 extending in parallel with the corresponding support block 40. The protruding amount of the opening/closing drive rod 42 from the main body of the opening/closing drive unit 41 (in particular, the protruding amount of the opening/closing drive rod 42 in a direction parallel to the extending direction of the corresponding support block 40) is variable, and a connecting unit 48 is rotatably attached to a distal end of the opening/closing drive rod 42. The connecting unit 48 is fixed to the first rotation shaft 49. In accordance with the protruding amount of the opening/closing drive rod 42, the connecting unit 48 swings about the first rotation shaft 49, and the first rotation shaft 49 rotates about its own central axis.

The gas replacement apparatus 10 according to the present embodiment having the above-described configuration includes the plurality of gas nozzles 17 (specifically, the two gas nozzles 17). Among these gas nozzles 17, the gas nozzle 17 arranged on the upstream side is referred to as the first gas nozzle 17a, and the gas nozzle arranged on the downstream side is referred to as the second gas nozzle 17b.

Each of the gas nozzles 17 extends in the height direction and is connected to a gas supply source (not illustrated) via a gas guide unit 46. A lower distal end of each of the gas nozzles 17 has an ejection po rt 20. A replacement gas, sent from the gas supply source to each of the gas nozzles 17 via the gas guide unit 46, is ejected from the ejection port 20. The replacement gas is blown into a bag B by ejecting the replacement gas from the ejection port 20 in a state where the ejection port 20 is arranged inside the bag B. The ejection of the replacement gas from the ejection port 20 can be controlled by an arbitrary method. For example, when the control unit 11 switches on and off the gas supply source to open and close a valve (not illustrated) provided in a gas supply pipe connecting the gas supply source and a gas guide unit 46 under the control of the control unit 11, it is possible to eject the replacement gas from the ejection port 20, to stop such ejection of the replacement gas, and to adjust the ejection amount of the replacement gas from the ejection port 20.

Each of the gas nozzles 17 is moved by a gas nozzle drive unit 28. Specifically, a gas nozzle drive unit 28 includes a nozzle lifting/lowering drive unit that moves each of the gas nozzles 17 in the height direction and a nozzle horizontal drive unit that moves each of the gas nozzles 17 in the horizontal direction.

The nozzle lifting/lowering drive unit moves each of the gas nozzles 17 in the height direction. Each of the gas nozzles 17 is lifted and lowered by the nozzle lifting/lowering drive unit to be arranged at an outer position and an inner position. When a gas nozzle 17 is arranged at the outer position, a distal end (in particular, the ejection port 20) of the gas nozzle 17 is positioned above a bag B held by a side holding unit 30. When a gas nozzle 17 is arranged at the inner position, a distal end of the gas nozzle 17 (especially the ejection port 20) is arranged at a position lower than the mouth portion and higher than the bottom portion of a bag B held by a side holding unit 30. Therefore, in a state where a bag B whose mouth portion is opened is arranged below a gas nozzle 17, the ejection port 20 is positioned outside the bag B by arranging the gas nozzle 17 at an upper position, and the ejection port 20 is positioned inside the bag B by arranging the gas nozzle 17 at a lower position.

The nozzle horizontal drive unit moves each of the gas nozzles 17 so as to move around the plurality of stations (in particular, the sixth station S6 to the eighth station S8). In particular, the nozzle horizontal drive unit of the present embodiment reciprocates each gas nozzle 17.

The illustrated gas nozzle drive units 28 include the movement base 39. Each of the gas nozzles 17 is connected to the movement base 39 via a lifting/lowering drive unit 43 (including a lifting/lowering drive rod 44), a nozzle holding unit 45, and a gas guide unit 46. The illustrated nozzle horizontal drive unit includes the motor 37 (including the motor rotation shaft 38), the movement base 39, the lifting/lowering drive units 43 (including the lifting/lowering drive rods 44), the nozzle holding units 45, and the gas guide units 46. In particular, the movement base 39 moves the gas nozzles 17 and the mouth holding units 19 in the horizontal direction in such a manner that the gas nozzles 17 and the mouth holding units 19 follow corresponding side holding units 30 and bags B only in a partial section among the first station S1 to the tenth station S10 (that is, only a section from the sixth station S6 to the eighth station S8) in the present embodiment as will be described later. On the other hand, the illustrated nozzle lifting/lowering drive unit includes the lifting/lowering drive units 43 (including the lifting/lowering drive rods 44), the nozzle holding units 45, and the gas guide units 46.

In the present embodiment, the plurality of mouth holding units 19 (specifically, the two mouth holding units 19) are provided. Between these mouth holding units 19, the mouth holding unit 19 arranged on the upstream side is referred to as the first mouth holding unit 19a, and the mouth holding unit 19 arranged on the downstream side is referred to as the second mouth holding unit 19b. The illustrated mouth holding units 19 each include a first pressing unit 55 and a second pressing unit 56. The mouth portion of each bag B is held by a mouth holding unit 19 by being pressed while being sandwiched between the first pressing unit 55 and the second pressing unit 56.

The mouth holding drive units 27 move the respective mouth holding units 19. Specifically, each of the mouth holding drive units 27 includes: a holding opening/closing drive unit that causes the first pressing unit 55 and the second pressing unit 56 of each of the mouth holding units 19 to be close to or away from each other; and a holding horizontal drive unit that moves each of the mouth holding units 19 in the horizontal direction.

The holding opening/closing drive unit moves the first pressing unit 55 and the second pressing unit 56 between a position where the first pressing unit 55 and the second pressing unit 56 sandwich the mouth portion of a bag B (i.e., the closed position; see a location indicated by the solid line in Fig. 2) and a position where the first pressing unit 55 and the second pressing unit 56 do not come into contact with a bag B (i.e., the open position; see a location indicated by the dotted line in Fig. 2). The mouth portion of a bag B is arranged in a space between the first pressing unit 55 and the second pressing unit 56 arranged at the open position, and then, the first pressing unit 55 and the second pressing unit 56 are arranged at the closed position. Accordingly, the bag B is frictionally held by the first pressing unit 55 and the second pressing unit 56 while being pressed in such a manner that the mouth portion is closed.

The holding opening/closing drive unit in the illustrated example includes, the opening/closing drive units 41 (including the opening/closing drive rods 42), the connecting units 48, the first rotation shafts 49, the first rotation gears 51, the first pressing levers 53, the first pressing support units 57, the second rotation shafts 50, the second rotation gears 52, the second pressing levers 54, and the second pressing support units 58. Power corresponding to the protruding amount of an opening/closing drive rod 42 is transmitted to a first rotation shaft 49 via a connecting unit 48, and the first rotation shaft 49 rotates about the central axis. In accordance with the rotation of the first rotation shaft 49, a first pressing lever 53, a first pressing support unit 57, and a first pressing unit 55 swing around the first rotation shaft 49 (in particular, the central axis). Meanwhile, the power is transmitted from the first rotation shaft 49 to a second rotation shaft 50 via a first rotation gear 51 and the second rotation gear 52, and the second rotation shaft 50 rotates about its own central axis. In accordance with the rotation of the second rotation shaft 50, a second pressing lever 54, a second pressing support unit 58, and a second pressing unit 56 swing around the second rotation shaft 50 (in particular, the central axis). In this manner, the first pressing unit 55 and the second pressing unit 56 move symmetrically around the first rotation shaft 49 and the second rotation shaft 50, respectively, according to the protruding amount of the opening/closing drive rod 42.

On the other hand, the holding horizontal drive unit in the illustrated example includes the motor 37 (including the motor rotation shaft 38), the movement base 39, the support blocks 40, the opening/closing drive units 41 (including the opening/closing drive rods 42), the connecting units 48, the first rotation shafts 49, the first pressing levers 53, the first pressing support units 57, the first rotation gears 51, the second rotation shafts 50, the second pressing levers 54, the second pressing support units 58, and the second rotation gears 52.

As described above, the movement base 39 is attached to the gas nozzles 17 and the mouth holding units 19 and constitutes a part of each of a mouth holding drive unit 27 and a gas nozzle drive unit 28. In this manner, the mouth holding drive units 27 and the gas nozzle drive units 28 include the common movement base 39. As the movement base 39 is moved, the mouth holding unit 19 and the gas nozzle 17 are integrally moved in the horizontal direction. In particular, in the present embodiment as illustrated in Fig. 3, the two or more mouth holding units 19 (in the present embodiment, the first mouth holding unit 19a and the second mouth holding unit 19b) and the two or more gas nozzles 17 (in the present embodiment, the first gas nozzle 17a and the second gas nozzle 17b) are attached to the single movement base 39, and thus the plurality of gas nozzles 17 and the plurality of mouth holding units 19 are integrally moved.

In the illustrated example, a connection structure between the first mouth holding unit 19a and the movement base 39 and a connection structure between the second mouth holding unit 19b and the movement base 39 are formed to be symmetric with respect to a symmetry axis Ar (see Fig. 3) extending in a radial direction from the rotation axis Ax. Accordingly, the elements constituting the gas replacement apparatus 10 can be arranged in a space-efficient manner.

### [Behaviors of Side Holding Unit, Gas Nozzle, and Mouth Holding Unit]

In the gas replacement apparatus 10 having the above-described configuration, a side holding unit 30, the gas nozzles 17, and the mouth holding units 19 exhibit the following behaviors.

Specifically, the side holding drive unit 26 and the mouth holding drive unit 27 move a side holding unit 30 and a mouth holding unit 19 from a first processing position to a second processing position while maintaining a state where the side holding unit 30 holds the side portions of a bag B and the mouth holding unit 19 holds the mouth portion of the bag B. At this time, a gas nozzle drive units 28 moves a gas nozzle 17 from the first processing position to the second processing position while maintaining a state where the ejection port 20 of the gas nozzle 17 is arranged inside the bag B.

In addition, the side holding drive unit 26 moves a side holding unit 30 from the second processing position to a third processing position while maintaining a state where the side holding unit 30 holds the side portions of a bag B. On the other hand, a mouth holding drive unit 27 and a gas nozzle drive unit 28 move a mouth holding unit 19 and a gas nozzle 17 from the second processing position to the first processing position without moving the mouth holding unit 19 and the gas nozzle 17 from the second processing position to the third processing position. In this case, it is preferable that the mouth holding drive unit 27 and the gas nozzle drive unit 28 move the mouth holding unit 19 and the gas nozzle 17 from the second processing position to the first processing position after the side holding unit 30 is arranged at the second processing position. In addition, it is preferable that the mouth holding drive unit 27 and the gas nozzle drive unit 28 move the mouth holding unit 19 and the gas nozzle 17 toward the first processing position during at least a part of time when the side holding unit 30 moves from the second processing position to the third processing position.

In the gas replacement apparatus 10 of the present embodiment including the plurality of gas nozzles 17 and the plurality of mouth holding units 19, the above first to third processing positions are determined with respect to each of the gas nozzles 17 and each of the mouth holding units 19. The illustrated packaging system 5 is provided with the plurality of stations S1 to S10 that are continuously adjacent to each other, and the plurality of stations include the four processing stations (the sixth station S6 to the ninth station S9) in which the gas replacement apparatus 10 is installed. For the first side holding unit 30a, the first mouth holding unit 19a, and the first gas nozzle 17a, the sixth station S6 (first processing station) corresponds to the above first processing position, the seventh station S7 (second processing station) corresponds to the above second processing position, and the eighth station S8 (third processing station) corresponds to the above third processing position. On the other hand, for the second side holding unit 30b, the second mouth holding unit 19b, and the second gas nozzle 17b, the seventh station S7 (second processing station) corresponds to the above first processing position, the eighth station S8 (third processing station) corresponds to the above second processing position, and the ninth station S9 (fourth processing station) corresponds to the above third processing position.

### [Gas Replacement Method]

Next, the flow of an example of the gas replacement method performed by the above-described gas replacement apparatus 10 will be described.

Figs. 4 to 8 are schematic plan views for describing an operation of the gas replacement apparatus 10. The illustration of some (for example, the nozzle holding unit 45 and the like) of the elements constituting the gas replacement apparatus 10 are omitted from Figs. 4 to 8.

According to the illustrated gas replacement apparatus 10, a replacement gas injection process is simultaneously performed on two bags B at three stations (that is, the sixth station S6 to the eighth station S8). On the other hand, a sealing process (in particular, a heat-sealing process) for each of the bags B is performed at one station (that is, the ninth station S9). In the present embodiment, the plurality of mouth holding drive units 27 and the plurality of gas nozzle drive units 28 (that is, two sets of the mouth holding drive units 27 and the gas nozzle drive units 28) are provided as described above, and the mouth holding drive units 27 exhibit substantially the same behavior at substantially the same timing as each other and the gas nozzle drive units 28 exhibit substantially the same behavior at substantially the same timing as each other. However, the mouth holding drive units 27 may exhibit substantially the same behavior at different timings from each other, and the gas nozzle drive units 28 may exhibit substantially the same behavior at different timings from each other.

First, side holding units 30 are moved by the side holding drive unit 26, and the two bags B each storing a content are arranged at the sixth station S6 and the seventh station S7, respectively, as illustrated in Fig. 4. Immediately after having moved to the sixth station S6 and the seventh station S7, the two bags B have not received a replacement gas and each mouth portion thereof is open.

While these bags B are moving from the fifth station S5 and the sixth station S6 to the sixth station S6 and the seventh station S7, each of the gas nozzles 17 is arranged at the outer position and does not collide with the bags B. Each of the mouth holding units 19 is arranged at the open position, and a space in which the bag B in the state of storing the content with the mouth portion open can be arranged is formed between the first pressing unit 55 and the second pressing unit 56. In the present embodiment, each of the mouth holding units 19 (that is, the first pressing unit 55 and the second pressing unit 56) arranged at the open position does not come into contact with the bags B in the state where the mouth portion is open. However, the mouth holding units 19 arranged at the open position may come into contact with the bags B in the state where the mouth portion is open. In this case, as will be described later, the mouth holding units 19 come into contact with the bags B so as to secure an open state of the mouth portions to such an extent that enables the gas nozzles 17 moving from the outer position to the inner position to appropriately enter the inside of the bags B.

Incidentally, the bag B arranged at the eighth station S8 illustrated in Fig. 4 is arranged in a state where the replacement gas has been already injected therein and the mouth portion is closed by the tension applied to the bag B from the side holding unit 30.

Each of the gas nozzles 17 is driven by the corresponding gas nozzle drive unit 28 to be moved from the outer position to the inner position. Accordingly, the first gas nozzle 17a is inserted inside the bag B positioned at the sixth station S6, and the second gas nozzle 17 b is inserted inside the bag B positioned at the seventh station S7. Therefore, the ejection ports 20 of the first gas nozzle 17a and the second gas nozzle 17b are arranged inside the bags B arranged at the sixth station S6 and the seventh station S7, respectively. While these gas nozzles 17 are moving from the outer position to the inner position, the mouth portion of each of the bags B is maintained at the open state, and each of the bags B does not come into contact with the corresponding gas nozzle 17 moving from the outer position to the inner position.

In the present embodiment, the movement of the gas nozzles 17 from the outer position to the inner position is performed after the bags B are stopped at the sixth station S6 and the seventh station S7. However, the movement of the respective gas nozzles 17 from the outer position to the inner position may be started before these bags B completely stop at the sixth station S6 and the seventh station S7. In addition, these gas nozzles 17 simultaneously move from the outer position to the inner position in the present embodiment, but may move at different timings.

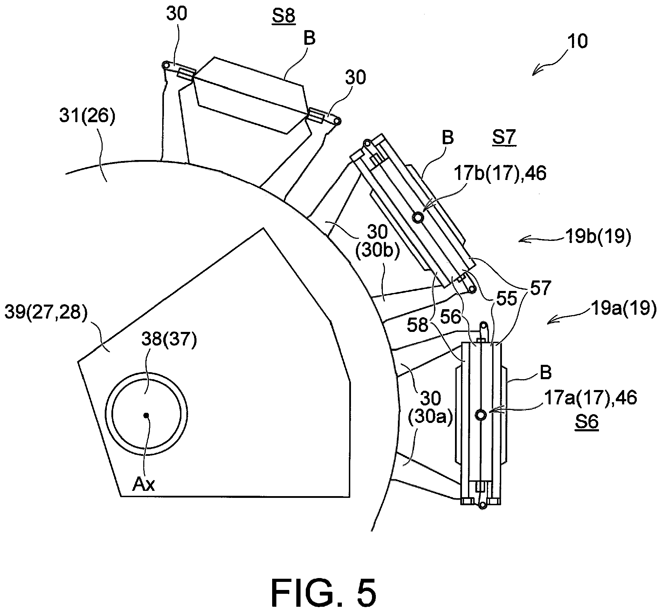

As illustrated in Fig. 5, the first pressing unit 55 and the second pressing unit 56 of each of the mouth holding units 19 are arranged at the closed position by the mouth holding drive unit 27 in a state where the ejection port 20 of each of the gas nozzles 17 is arranged inside the corresponding bag B. Accordingly, each of the mouth holding units 19 closes the mouth portion of the bag B in a state where the gas nozzle 17 is inserted into the bag B. Although each of the gas nozzles 17 is pressed by the corresponding mouth holding unit 19 via the front surface and back surface of the bag B at this time, a gap is formed between each of the gas nozzles 17 and the corresponding mouth holding unit 19. It is possible to circulate a gas between the inside and the outside of the bag B through the gap formed in this manner.

Then, a replacement gas is ejected into the corresponding bag B from the ejection port 20 of each of the gas nozzles 17 arranged at the inner position, and a gas inside each of the bags B is gradually replaced with the replacement gas. Specifically, the gas existing in the bag B flows out of the bag B through the gap between the gas nozzle 17 and the mouth holding unit 19 along with the supply of the replacement gas from the ejection port 20 into the bag B, and a ratio of the replacement gas relative the gas in the bag B gradually increases. At this time, the timing to start the ejection of the replacement gas from the ejection port 20 is not limited, and may be after the ejection port 20 is arranged inside the corresponding bag B or before the ejection port 20 is arranged inside the corresponding bag B. Each of the gas nozzles 17 may have an exhaust path (not illustrated). When one end of the exhaust path is arranged inside the bag B and the other end thereof is arranged outside the bag B in a state where the ejection port 20 is arranged inside the bag B, the gas inside the bag B can be efficiently discharged out of the bag B.

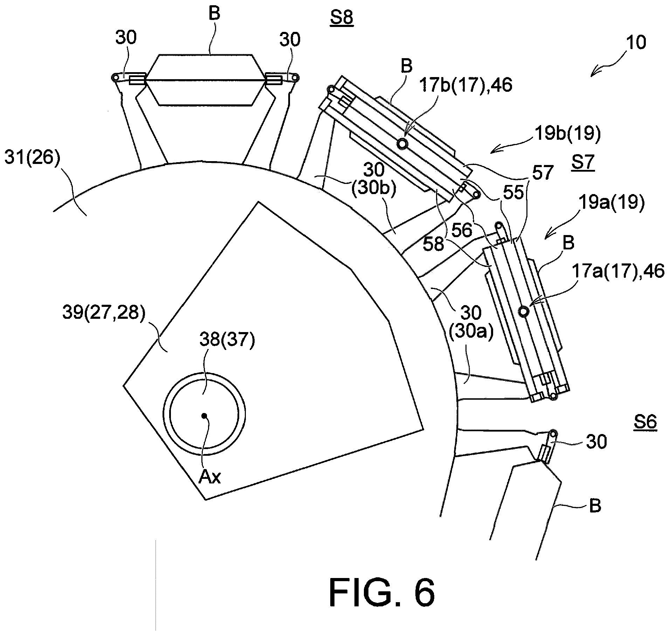

As illustrated in Fig. 6, the bags B, the side holding units 30, the gas nozzles 17, and the mouth holding units 19 are moved from the sixth station S6 and the seventh station S7 to the seventh station S7 and the eighth station S8. Specifically, when the rotary table 31 is rotated, the two bags B are moved from the sixth station S6 and the seventh station S7 to the seventh station S7 and the eighth station S8 together with the side holding units 30, respectively. In addition, as the motor rotation shaft 38 is rotated, the movement base 39 is rotated about the rotation axis Ax, and the two gas nozzles 17 and the two mouth holding units 19 are moved from the sixth station S6 and the seventh station S7 to the seventh station S7 and the eighth station S8, respectively.

At this time, each of the gas nozzles 17 and each of the mouth holding units 19 are moved so as to follow the corresponding bag B. Specifically, the movement base 39 is rotated according to the rotation of the rotary table 31, and a rotation timing and angular velocity of the rotary table 31 are set to coincide with the rotation timing and the angular velocity of the movement base 39, for example. Accordingly, it is possible to maintain the state where the ejection port 20 of each of the gas nozzles 17 is arranged inside the corresponding bag B, and the replacement gas can be continuously blown into each of the bags B from each of the gas nozzles 17 even during movement between the stations. In addition, the mouth holding units 19 each can maintain the state of sandwiching the bag B and can close the mouth portion of each of the bags B to prevent inflow of outside air from the outside to the inside of the bag B even during movement between the stations.

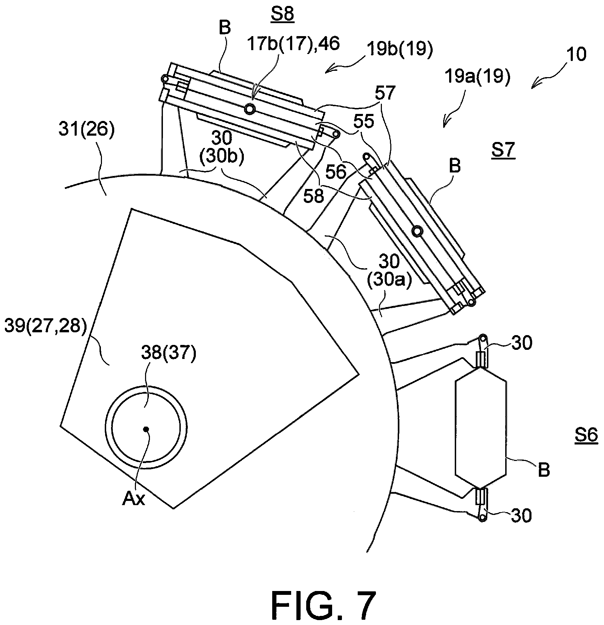

As illustrated in Fig. 7, the bags B, the side holding units 30, the gas nozzles 17, and the mouth holding units 19 are arranged at the seventh station S7 and the eighth station S8. Even after the bags B, the side holding units 30, the gas nozzles 17, and the mouth holding units 19 are arranged at the seventh station S7 and the eighth station S8 (in intermittent stop in the present embodiment), the replacement gas can be continuously ejected from the ejection port 20 of each of the gas nozzles 17 into the bag B. In addition, it is possible to continue the ejection of the replacement gas from the ejection ports 20 of the respective gas nozzles 17 into the bags B until the bags B and the side holding units 30 start moving from the seventh station S7 and the eighth station S8 to the eighth station S8 and the ninth station S9.

Then, the mouth holding drive units 27 and the gas nozzle drive units 28 drive the respective gas nozzles 17 and the respective mouth holding units 19 in such a manner that, when the bags B and the side holding units 30 start moving from the seventh station S7 and the eighth station S8 toward the eighth station S8 and the ninth station S9, respectively, each of the gas nozzles 17 is arranged at the outer position and each of the mouth holding units 19 is arranged at the open position. Specifically, before the bags B and the side holding units 30 start moving from the seventh station S7 and the eighth station S8 to the eighth station S8 and the ninth station S9, respectively, the gas nozzle drive units 28 arrange the respective gas nozzles 17 at the outer position, and the mouth holding drive units 27 arrange the respective mouth holding units 19 at the open position.

In addition, the side holding units 30 arranged at the seventh station S7 and the eighth station S8 are driven by the holding adjustment mechanism (not illustrated) so as to adjust the tension to be applied to the corresponding bags B in such a manner that the mouth portions of the corresponding bags B are closed. This tension adjustment can be performed at an arbitrary timing. For example, the tension adjustment may be performed before each of the gas nozzles 17 is arranged at the outer position (that is, before or during the movement of each of the gas nozzles 17 from the inner position to the outer position) or after each of the gas nozzles 17 is arranged at the outer position. In addition, the tension adjustment may be performed before each of the mouth holding units 19 is arranged at the open position (that is, before or during the movement of each of the mouth holding units 19 from the closed position to the open position) or after each of the mouth holding units 19 is arranged at the open position.

In this manner, since the plurality of gas nozzles 17 and the plurality of mouth holding units 19 are provided, the replacement gas can be blown into a bag B while the bag B stays at the first processing position (the sixth station S6 or the seventh station S7), while the bag B is moving from the first processing position to the second processing position (the seventh station S7 or the eighth station S8), and while the bag B stays at the second processing position. On the other hand, when only the single gas nozzle 17 and only the single mouth holding unit 19 are provided, it is necessary to return the gas nozzle 17 and the mouth holding unit 19 from the second processing position to the first processing position after the gas nozzle 17 and the mouth holding unit 19 are moved from the first processing position to the second processing position together with the bag B and the side holding unit 30 before a new bag starts moving from the first processing position to the second processing position. In this case, a time for which the gas nozzles 17 and the mouth holding units 19 can stay at the second processing position is very limited, and thus, it is difficult to secure a sufficient time to blow the replacement gas from the gas nozzles 17 into the bags B at the first processing position and/or the second processing position.

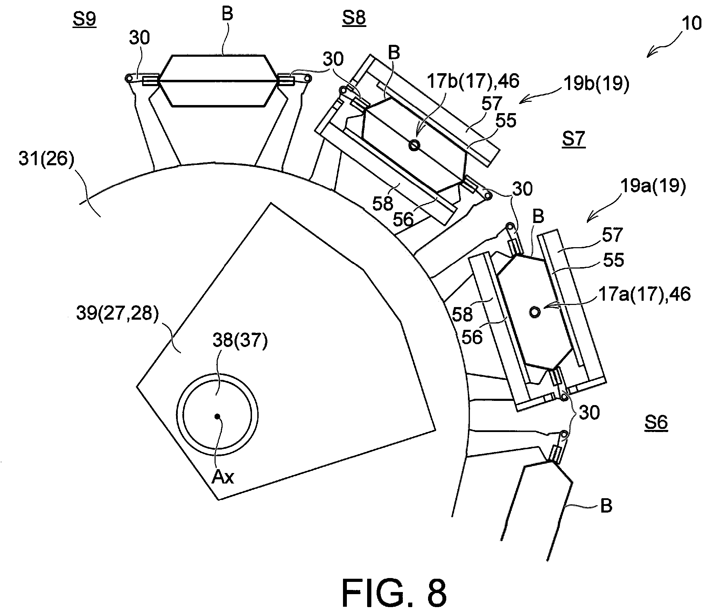

As illustrated in Fig. 8, the side holding units 30 move from the seventh station S7 and the eighth station S8 to the eighth station S8 and the ninth station S9 together with the bags B into which the replacement gas has been injected, and the respective gas nozzles 17 arranged at the outer position and the respective mouth holding units 19 arranged at the open position move from the seventh station S7 and the eighth station S8 to the sixth station S6 and the seventh station S7.

In Fig. 8, the "bag B moving from the eighth station S8 to the ninth station S9" and the "bag B moving from the seventh station S7 to the eighth station S8" are bags each storing the replacement gas therein with the mouth portion closed (that is, the bags into which the gas has been blown). On the other hand, in Fig. 8, the "bag B moving from the sixth station S6 to the seventh station S7" and the "bag B moving from the fifth station S5 to the sixth station S6" are bags each having the open mouth portion and into which no replacement gas has been blown.

The gas nozzles 17 and the mouth holding units 19 (see Fig. 4) having returned to the sixth station S6 and the seventh station S7 repeat the above series of operations to inject the replacement gas into the new bags B arranged at the sixth station S6 and the seventh station S7, respectively.

On the other hand, the mouth portion of the bag B in which the replacement gas has been stored is sealed by the sealing unit 21 at the ninth station S9. Accordingly, the bag B is sealed in a state of being filled with the replacement gas.

As described above, according to the gas replacement apparatus 10 and the gas replacement method of the present embodiment, the replacement gas can be stably supplied into a bag B in a state where the side portions and the mouth portion of the bag B are held by the side holding unit 30 and the mouth holding unit 19. Since the bag B is supported from a plurality of directions as described above, the bag B can be stably held, and it is possible to prevent a position shift of the bag B when an unintended force acts on the bag B. When the position of the bag B with respect to the side holding unit 30 is shifted, there is a possibility that the replacement of the gas inside the bag B with the replacement gas may be insufficient, and further, there is a possibility of causing defective sealing of the bag B. For example, when a bag B is conveyed at a high speed, a large inertia force may act on the bag B. According to the gas replacement apparatus 10 and the gas replacement method of the present embodiment, it is possible to prevent the positional shift of the bag B by the side holding unit 30 and the mouth holding unit 19 even when such a large inertial force acts on the bag B.

In addition, the gas nozzles 17 and the mouth holding units 19 are moved to reciprocate, and thus gases in the plurality of bags B can be continuously replaced with the replacement gases using the limited number of gas nozzles 17 and the limited number of mouth holding units 19. By preventing the increase in the number of gas nozzles 17 and the number of mouth holding units 19 in this manner, it is possible to suppress the increase in device cost.

In addition, the mechanism for moving the gas nozzles 17 and the mouth holding units 19 in the horizontal direction using the common movement base 39 is adopted, and thus the drive source can be shared, and the gas nozzles 17 and the mouth holding units 19 can be moved synchronously with the simple configuration while suppressing the cost. In particular, the plurality of gas nozzles 17 and the plurality of mouth holding units 19 are attached to the common movement base 39, and thus it is possible to more effectively promote the cost reduction and simplification of the configuration.

In addition, the plurality of gas nozzles 17 and the plurality of mouth holding units 19 are installed so as to be continuously adjacent to each other, and thus it is easy to secure the sufficient time for the replacement gas to be blown into the bags B, and it is possible to improve a replacement ratio of the gas inside the bag B with the replacement gas. In particular, since the two gas nozzles 17 and the two mouth holding units 19 are provided, it is possible to secure the sufficient time to blow the replacement gas while suppressing the increase in device cost.

### [Variations]

Although each of the gas nozzles 17 and each of the mouth holding units 19 are moved in the horizontal direction using the common movement base 39 and the common drive source (that is, the motor 37) in the above-described embodiment, the gas nozzle 17 and the mouth holding unit 19 may be moved using separate drive mechanisms and separate drive sources. In such a case, the control unit 11 can control the drive mechanisms and the drive sources in such a manner that each of the gas nozzles 17 and each of the mouth holding units 19 appropriately follow the corresponding bag B.

In addition, in the above-described embodiment, the gas nozzles 17 and the mouth holding units 19 are provided so as to reciprocate, and the number of gas nozzles 17 and the number of mouth holding units 19 are fewer than the number of stations and the number of side holding units 30. However, the number of gas nozzles 17 and the number of mouth holding units 19 are not limited, and may be the same as the number of stations and the number of side holding units 30, for example. In this case, a unique gas nozzle 17 and a unique mouth holding unit 19 can be associated with each of the side holding units 30, and a side holding unit 30, a gas nozzle 17 and a mouth holding unit 19 that are associated with each other can be integrally moved in the horizontal direction. Such a device configuration can be easily realized by applying, for example, the device illustrated in Fig. 1 of Japanese patent application publication No. 55-89022. In this case, it is possible to use a common drive source configured to move the side holding unit 30, the gas nozzle 17 and the mouth holding unit 19 in the horizontal direction.

Although the rotary table 31 and the side holding units 30 move intermittently in the above-described embodiment, the side holding drive unit 26 may continuously move the side holding units 30 (including the rotary table 31) without stopping the side holding units 30. When the rotary table 31 and the side holding units 30 continuously move, the mouth holding drive units 27 and the gas nozzle drive units 28 can continuously move the gas nozzles 17 and the mouth holding units 19 according to the moving speed of the bags B and the side holding units 30 in such a manner that the gas nozzles 17 and the mouth holding units 19 appropriately follow the side holding units 30 and the bags B.

In the above-described embodiment, each of the side holding units 30 holds a bag B in a suspended state, but the bag B may be held in another posture. For example, each of the side holding units 30 may move around the first station S1 to the tenth station S10 while holding bags B in a lying posture (that is, the bags B in a state of extending in the horizontal direction).

In addition, a movement trajectory of each of the side holding units 30 and a movement trajectory of each of the bags B are not limited to the above circular trajectory, and may be other curved trajectories, straight trajectories, or trajectories combining both the curved trajectory and the straight trajectory (for example, an endless trajectory whose both ends are semicircular trajectories (that is, a racetrack trajectory)).

In addition, a method for sealing the mouth portion of a bag B is not limited, and the sealing unit 21 may seal the mouth portion of a bag B by means other than heating.

## Claims

1. A gas replacement apparatus (10) comprising:
a side holding unit (30) that holds a side portion of a bag (B);
a mouth holding unit (19) that holds a mouth portion of the bag (B);
a gas nozzle (17) having an ejection port (20) to eject a replacement gas;
a side holding drive unit (26) that moves the side holding unit (30);
a mouth holding drive unit (27) that moves the mouth holding unit (19);
a gas nozzle drive unit (28) that moves the gas nozzle (17); and
a sealing unit (21) that seals the mouth portion, wherein
the side holding drive unit (26) and the mouth holding drive unit (27) move the side holding unit (30) and the mouth holding unit (19) from a first processing position to a second processing position while maintaining a state where the side holding unit (30) holds the side portion and the mouth holding unit (19) holds the mouth portion, and
the gas nozzle drive unit (28) moves the gas nozzle (17) from the first processing position to the second processing position while maintaining a state where the ejection port (20) is arranged inside the bag (B).

2. The gas replacement apparatus (10) as defined in claim 1, wherein
the side holding drive unit (26) moves the side holding unit (30) from the second processing position to a third processing position while maintaining a state where the side holding unit (30) holds the side portion, and
the mouth holding drive unit (27) and the gas nozzle drive unit (28) move the mouth holding unit (19) and the gas nozzle (17) from the second processing position to the first processing position without moving the mouth holding unit (19) and the gas nozzle (17) from the second processing position to the third processing position.

3. The gas replacement apparatus (10) as defined in claim 1 or 2, wherein
the mouth holding drive unit (27) and the gas nozzle drive unit (28) include a common movement base (39) to which the mouth holding unit (19) and the gas nozzle (17) are attached, and
the mouth holding unit (19) and the gas nozzle (17) are moved by moving the movement base (39).

4. The gas replacement apparatus (10) as defined in claim 3, wherein
a plurality of side holding units (30), a plurality of mouth holding units (19), and a plurality of gas nozzles (17) are provided, and
two or more mouth holding units (19) and two or more gas nozzles (17) are attached to the single movement base (39).

5. The gas replacement apparatus (10) as defined in any one of claims 1 to 4, wherein the side holding unit (30) holds the bag (B) in a suspended state.

6. The gas replacement apparatus (10) as defined in any one of claims 1 to 5, wherein the side holding drive unit (26) intermittently moves the side holding unit (30).

7. The gas replacement apparatus (10) as defined in any one of claims 1 to 6, wherein
the side holding drive unit (26) includes a rotary table (31) provided to be rotatable about a rotation axis (Ax), and
the side holding unit (30) is attached to an outer peripheral portion of the rotary table (31) and is moved in accordance with rotation of the rotary table (31).

8. The gas replacement apparatus (10) as defined in claim 2, wherein
a plurality of side holding units (30), a plurality of mouth holding units (19), and a plurality of gas nozzles (17) are provided, and
the mouth holding drive unit (27) and the gas nozzle drive unit (28) move the mouth holding unit (19) and the gas nozzle (17) from the second processing position to the first processing position after the side holding unit (30) is arranged at the second processing position.

9. The gas replacement apparatus (10) as defined in claim 8, wherein the mouth holding drive unit (27) and the gas nozzle drive unit (28) move the mouth holding unit (19) and the gas nozzle (17) toward the first processing position during at least a part of time when the side holding unit (30) moves from the second processing position to the third processing position.

10. The gas replacement apparatus (10) as defined in claim 8 or 9, wherein
a plurality of stations (S1 to S10) are provided to be continuously adjacent to each other, the plurality of stations (S1 to S10) including a first processing station, a second processing station, a third processing station, and a fourth processing station,
the plurality of side holding units (30) include a first side holding unit (30a) and a second side holding unit (30b),
the plurality of mouth holding units (19) include a first mouth holding unit (19a) and a second mouth holding unit (19b),
the plurality of gas nozzles (17) include a first gas nozzle (17a) and a second gas nozzle (17b),
for the first side holding unit (30a), the first mouth holding unit (19a), and the first gas nozzle (17a), the first processing station corresponds to the first processing position, the second processing station corresponds to the second processing position, and the third processing station corresponds to the third processing position, and
for the second side holding unit (30b), the second mouth holding unit (19b), and the second gas nozzle (17b), the second processing station corresponds to the first processing position, the third processing station corresponds to the second processing position, and the fourth processing station corresponds to the third processing position.

## Patentansprüche

1. Gasaustauschvorrichtung (10), die umfasst:
eine Einheit (30) zum Halten einer Seite, die einen Seitenabschnitt eines Beutels (B) hält;
eine Einheit (19) zum Halten einer Öffnung, die einen Öffnungsabschnitt des Beutels (B) hält;
eine Gasdüse (17) mit einer Ausstoßöffnung (20) zum Ausstoßen eines Austauschgases;
eine Einheit (26) für Seitenhalte-Antrieb, die die Einheit (30) zum Halten einer Seite bewegt;
eine Einheit (27) für Öffnungshalte-Antrieb, die die Einheit (19) zum Halten einer Öffnung bewegt;
eine Einheit (28) für Gasdüsen-Antrieb, die die Gasdüse (17) bewegt; und
eine Dichtungs-Einheit (21), die den Öffnungsbereich abdichtet, wobei
die Einheit (26) für Seitenhalte-Antrieb und die Einheit (27) für Öffnungshalte-Antrieb die Einheit (30) zum Halten einer Seite und die Einheit (19) zum Halten einer Öffnung von einer ersten Verarbeitungsposition an eine zweite Verarbeitungsposition bewegen und dabei einen Zustand aufrechterhalten, in dem die Einheit (30) zum Halten einer Seite den Seitenabschnitt hält und die Einheit (19) zum Halten einer Öffnung den Öffnungsabschnitt hält, und
die Einheit (28) für Gasdüsen-Antrieb die Gasdüse (17) von der ersten Verarbeitungsposition an die zweite Verarbeitungsposition bewegt und dabei einen Zustand aufrechterhält, in dem die Ausstoßöffnung (20) im Inneren des Beutels (B) angeordnet ist.

2. Gasaustauschvorrichtung (10) nach Anspruch 1, wobei
die Einheit (26) für Seitenhalte-Antrieb die Einheit (30) zum Halten einer Seite von der zweiten Verarbeitungsposition an eine dritte Verarbeitungsposition bewegt und dabei einen Zustand aufrechterhält, in dem die Einheit (30) zum Halten einer Seite den Seitenabschnitt hält, und
die Einheit (27) für Öffnungshalte-Antrieb und die Einheit (28) für Gasdüsen-Antrieb die Einheit (19) zum Halten einer Öffnung und die Gasdüse (17) von der zweiten Verarbeitungsposition an die erste Verarbeitungsposition bewegen, ohne die Einheit (19) zum Halten einer Öffnung und die Gasdüse (17) von der zweiten Verarbeitungsposition an die dritte Verarbeitungsposition zu bewegen.

3. Gasaustauschvorrichtung (10) nach Anspruch 1 oder 2, wobei
die Einheit (27) für Öffnungshalte-Antrieb und die Einheit (28) für Gasdüsen-Antrieb einen gemeinsamen Träger (39) für Bewegung enthalten, an dem die Einheit (19) zum Halten einer Öffnung und die Gasdüse (17) angebracht sind, und
die Einheit (19) zum Halten einer Öffnung und die Gasdüse (17) durch Bewegen des Trägers (39) für Bewegung bewegt werden.

4. Gasaustauschvorrichtung (10) nach Anspruch 3, wobei
eine Vielzahl von Einheiten (30) zum Halten einer Seite, eine Vielzahl von Einheiten (19) zum Halten einer Öffnung sowie eine Vielzahl von Gasdüsen (17) vorhanden sind, und
zwei oder mehr Einheiten (19) zum Halten einer Öffnung sowie zwei oder mehr Gasdüsen (17) an dem einen Träger (39) für Bewegung angebracht sind.

5. Gasaustauschvorrichtung (10) nach einem der Ansprüche 1 bis 4, wobei die Einheit (30) zum Halten einer Seite den Beutel (B) in einem hängenden Zustand hält.

6. Gasaustauschvorrichtung (10) nach einem der Ansprüche 1 bis 5, wobei die Einheit (26) für Seitenhalte-Antrieb die Einheit (30) zum Halten einer Seite intermittierend bewegt.

7. Gasaustauschvorrichtung (10) nach einem der Ansprüche 1 bis 6, wobei
die Einheit (26) für Seitenhalte-Antrieb einen Drehtisch (31) enthält, der um eine Drehachse (Ax) herum gedreht werden kann, und
die Einheit (30) zum Halten einer Seite an einem Außenumfangsabschnitt des Drehtischs (31) angebracht ist und entsprechend Drehung des Drehtischs (31) bewegt wird.

8. Gasaustauschvorrichtung (10) nach Anspruch 2, wobei
eine Vielzahl von Einheiten (30) zum Halten einer Seite, eine Vielzahl von Einheiten (19) zum Halten einer Öffnung sowie eine Vielzahl von Gasdüsen (17) vorhanden sind, und
die Einheit (27) für Öffnungshalte-Antrieb und die Einheit (28) für Gasdüsen-Antrieb die Einheit (19) zum Halten einer Öffnung und die Gasdüse (17) von der zweiten Verarbeitungsposition an die erste Verarbeitungsposition bewegen, nachdem die Einheit (30) zum Halten einer Seite an der zweiten Verarbeitungsposition angeordnet ist.

9. Gasaustauschvorrichtung (10) nach Anspruch 8, wobei die Einheit (27) für Öffnungshalte-Antrieb und die Einheit (28) für Gasdüsen-Antrieb die Einheit (19) zum Halten einer Öffnung und die Gasdüse (17) wenigstens während eines Teils der Zeit, in der sich die Einheit (30) zum Halten einer Seite von der zweiten Verarbeitungsposition an die dritte Verarbeitungsposition bewegt, in Richtung der ersten Verarbeitungsposition bewegen.

10. Gasaustauschvorrichtung (10) nach Anspruch 8 oder 9, wobei
eine Vielzahl von Stationen (S1 bis S10) vorhanden sind, die kontinuierlich aneinandergrenzen, und die Vielzahl von Stationen (S1 bis S10) eine erste Verarbeitungsstation, eine zweite Verarbeitungsstation, eine dritte Verarbeitungsstation sowie eine vierte Verarbeitungsstation einschließt,
die Vielzahl von Einheiten (30) zum Halten einer Seite eine erste Einheit (30a) zum Halten einer Seite sowie eine zweite Einheit (30b) zum Halten einer Seite einschließt,
die Vielzahl von Einheiten (19) zum Halten einer Öffnung eine erste Einheit (19a) zum Halten einer Öffnung sowie eine zweite Einheit (19b) zum Halten einer Öffnung einschließt,
die Vielzahl von Gasdüsen (17) eine erste Gasdüse (17a) und eine zweite Gasdüse (17b) einschließt,
für die erste Einheit (30a) zum Halten einer Seite, die erste Einheit (19a) zum Halten einer Öffnung und die erste Gasdüse (17a) die erste Verarbeitungsstation der ersten Verarbeitungsposition entspricht, die zweite Verarbeitungsstation der zweiten Verarbeitungsposition entspricht und die dritte Verarbeitungsstation der dritten Verarbeitungsposition entspricht, und
für die zweite Einheit (30b) zum Halten einer Seite, die zweite Einheit (19b) zum Halten einer Öffnung und die zweite Gasdüse (17b) die zweite Verarbeitungsstation der ersten Verarbeitungsposition entspricht, die dritte Verarbeitungsstation der zweiten Verarbeitungsposition entspricht, und die vierte Verarbeitungsstation der dritten Verarbeitungsposition entspricht.

## Revendications

1. Appareil de remplacement de gaz (10) comprenant :
une unité de support latéral (30) qui supporte une partie latérale d'un sac (B) ;
une unité de support d'embouchure (19) qui supporte une partie d'embouchure du sac (B) ;
un éjecteur de gaz (17) qui comporte un orifice d'éjection (20) pour éjecter un gaz de remplacement ;
une unité d'entraînement de support latéral (26) qui déplace l'unité de support latéral (30) ;
une unité d'entraînement de support d'embouchure (27) qui déplace l'unité de support d'embouchure (19) ;
une unité d'entraînement d'éjecteur de gaz (28) qui déplace l'éjecteur de gaz (17) ; et
une unité d'étanchéité (21) qui assure l'étanchéité de la partie d'embouchure ; dans lequel :
l'unité d'entraînement de support latéral (26) et l'unité d'entraînement de support d'embouchure (27) déplacent l'unité de support latéral (30) et l'unité de support d'embouchure (19) depuis une première position de traitement jusqu'à une deuxième position de traitement tout en maintenant un état dans lequel l'unité de support latéral (30) supporte la partie latérale et l'unité de support d'embouchure (19) supporte la partie d'embouchure ; et
l'unité d'entraînement d'éjecteur de gaz (28) déplace l'éjecteur de gaz (17) depuis la première position de traitement jusqu'à la deuxième position de traitement tout en maintenant un état dans lequel l'orifice d'éjection (20) est agencé à l'intérieur du sac (B).

2. Appareil de remplacement de gaz (10) tel que défini selon la revendication 1, dans lequel :
l'unité d'entraînement de support latéral (26) déplace l'unité de support latéral (30) depuis la deuxième position de traitement jusqu'à une troisième position de traitement tout en maintenant un état dans lequel l'unité de support latéral (30) supporte la partie latérale ; et
l'unité d'entraînement de support d'embouchure (27) et l'unité d'entraînement d'éjecteur de gaz (28) déplacent l'unité de support d'embouchure (19) et l'éjecteur de gaz (17) depuis la deuxième position de traitement jusqu'à la première position de traitement sans déplacer l'unité de support d'embouchure (19) et l'éjecteur de gaz (17) de la deuxième position de traitement à la troisième position de traitement.

3. Appareil de remplacement de gaz (10) tel que défini selon la revendication 1 ou 2, dans lequel :
l'unité d'entraînement de support d'embouchure (27) et l'unité d'entraînement d'éjecteur de gaz (28) incluent une base de déplacement commune (39) à laquelle l'unité de support d'embouchure (19) et l'éjecteur de gaz (17) sont fixés ; et
l'unité de support d'embouchure (19) et l'éjecteur de gaz (17) sont déplacés en déplaçant la base de déplacement commune (39).

4. Appareil de remplacement de gaz (10) tel que défini selon la revendication 3, dans lequel :
une pluralité d'unités de support latéral (30), une pluralité d'unités de support d'embouchure (19) et une pluralité d'éjecteurs de gaz (17) sont prévues ; et
deux unités de support d'embouchure ou plus (19) et deux éjecteurs de gaz ou plus (17) sont fixés à l'unique base de déplacement (39).

5. Appareil de remplacement de gaz (10) tel que défini selon l'une quelconque des revendications 1 à 4, dans lequel l'unité de support latéral (30) supporte le sac (B) dans un état suspendu.

6. Appareil de remplacement de gaz (10) tel que défini selon l'une quelconque des revendications 1 à 5, dans lequel l'unité d'entraînement de support latéral (26) déplace par intermittence l'unité de support latéral (30).

7. Appareil de remplacement de gaz (10) tel que défini selon l'une quelconque des revendications 1 à 6, dans lequel :
l'unité d'entraînement de support latéral (26) inclut un plateau rotatif (31) qui est prévu de manière à ce qu'il puisse être entraîné en rotation autour d'un axe de rotation (Ax) ; et
l'unité de support latéral (30) est fixée à une partie périphérique externe du plateau rotatif (31) et elle est déplacée en fonction de la rotation du plateau rotatif (31).

8. Appareil de remplacement de gaz (10) tel que défini selon la revendication 2, dans lequel :
une pluralité d'unités de support latéral (30), une pluralité d'unités de support d'embouchure (19) et une pluralité d'éjecteurs de gaz (17) sont prévues ; et
l'unité d'entraînement de support d'embouchure (27) et l'unité d'entraînement d'éjecteur de gaz (28) déplacent l'unité de support d'embouchure (19) et l'éjecteur de gaz (17) depuis la deuxième position de traitement jusqu'à la première position de traitement après que l'unité de support latéral (30) est agencée au niveau de la deuxième position de traitement.

9. Appareil de remplacement de gaz (10) tel que défini selon la revendication 8, dans lequel l'unité d'entraînement de support d'embouchure (27) et l'unité d'entraînement d'éjecteur de gaz (28) déplacent l'unité de support d'embouchure (19) et l'éjecteur de gaz (17) en direction de la première position de traitement pendant au moins une partie du temps pendant lequel l'unité de support latéral (30) est déplacée depuis la deuxième position de traitement jusqu'à la troisième position de traitement.

10. Appareil de remplacement de gaz (10) tel que défini selon la revendication 8 ou 9, dans lequel :
des stations selon une pluralité de stations (S1 à S10) sont configurées pour être continûment adjacentes les unes aux autres, la pluralité de stations (S1 à S10) incluant une première station de traitement, une deuxième station de traitement, une troisième station de traitement et une quatrième station de traitement ;
les unités de la pluralité d'unités de support latéral (30) incluent une première unité de support latéral (30a) et une seconde unité de support latéral (30b) ;
les unités de la pluralité d'unités de support d'embouchure (19) incluent une première unité de support d'embouchure (19a) et une seconde unité de support d'embouchure (19b) ;
les éjecteurs de la pluralité d'éjecteurs de gaz (17) incluent un premier éjecteur de gaz (17a) et un second éjecteur de gaz (17b) ;
pour la première unité de support latéral (30a), la première unité de support d'embouchure (19a) et le premier éjecteur de gaz (17a), la première station de traitement correspond à la première position de traitement, la deuxième station de traitement correspond à la deuxième position de traitement et la troisième station de traitement correspond à la troisième position de traitement ; et
pour la seconde unité de support latéral (30b), la seconde unité de support d'embouchure (19b) et le second éjecteur de gaz (17b), la deuxième station de traitement correspond à la première position de traitement, la troisième station de traitement correspond à la deuxième position de traitement et la quatrième station de traitement correspond à la troisième position de traitement.
